# EUROPÄISCHE PATENTSCHRIFT

(11) **EP 0 612 986 B1**
(45) Veröffentlichungstag und Bekanntmachung des Hinweises auf die Patenterteilung: **22.04.1998**
(21) Anmeldenummer: 93118112.7
(22) Anmeldetag: 09.11.1993
(51) Int. Cl.: G01G 23/37

(54) **Verfahren zum Anwählen und Konfigurieren von Wägeprogrammen in einer Waage und eine elektronische Waage**
Method for selecting and configuring weighing programs in a balance and an electronic balance
Procédé pour sélectionner et configurer des programmes de pesage dans une balance et une balance électronique

(30) Priorität: 26.02.1993 CH 589/93
(43) Veröffentlichungstag der Anmeldung: 31.08.1994
(73) Patentinhaber: Mettler-Toledo GmbH, 8606 Greifensee (CH)
(72) Erfinder: Berli, Urs, CH-8494 Bauma (CH)

(56) Entgegenhaltungen:
- EP-B- 0 397 092
- WO-A-88/00371
- DE-A- 3 213 015
- DE-A- 3 638 210
- DE-A- 3 942 311

## Beschreibung

Gegenstand der Erfindung ist ein Verfahren zum Anwählen und Konfigurieren von Wägeprogrammen in einer Waage mit einer Tastatur und einem Anzeigefeld.
Gegenstand der Erfindung ist weiter eine elektronische Waage, mit einer Messzelle, einer digitalen Signalverarbeitungseinheit für die Verarbeitung und Anzeige unterschiedlicher Wägeprogramme, einem Anzeigefeld zum alphanumerischen Anzeigen der Messwerte und -parameter und einer Tastatur zum elektronischen Nullstellen der Anzeige sowie zum Anwählen und Konfigurieren eines der Wägeprogramme.

Neuere elektronische Waagen weisen für die Anzeige des Wägeresultates sowie für die Anzeige weiterer Funktionen ein alphanumerisches Anzeigefeld auf. Eine solche Waage ist aus der DE-A1-36 38 210 bekannt. Diese verfügt über eine digitale Signalverarbeitungseinheit, die mehrere Programme aufweist, sowie über ein Anzeigefeld und eine Tarataste zum elektronischen Nullstellen der Anzeige. Die Tarataste ist in mehrere Teilbereiche unterteilt, wobei jeder Teilbereich auf einem getrennten Schaltelement abgestützt ist, so dass softwaregesteuert entweder alle Schaltelemente die gleiche Funktion, nämlich das Tarieren, auslösen, oder jedes Schaltelement eine andere Funktion auslöst. Es wird dadurch erreicht, dass die Tarataste für einfache Wägeprogramme als breite Taste zur Verfügung steht, die an beliebiger Stelle bedient werden kann.
Die Idee bestand also darin, in einfachen Operationen die üblicherweise in Teilbereiche aufgetrennte Taste in ihrer gesamten Breite als Tarataste benutzen zu können. Für die Anwahl eines anderen Wägeprogrammes wird folglich eine zusätzliche Taste benötigt. Nach der Betätigung dieser zusätzlichen Umschalt-Taste erscheinen über der Tarataste die Auswahlparameter des mit der zusätzlichen Taste angewählten anderen Programmes. Mit der nun unterteilten Tarataste können die einzelnen Programmpunkte aktiviert werden.

Aus der DE-A1-39 42 311 ist weiter eine Bedienvorrichtung für ein elektronisches Gerät bekannt, mit einem in vier Fenster unterteilten alphanumerischen Anzeigefeld und mit um das Anzeigefeld herum fest angeordneten Tasten oder Softkeys. Den vier Menüfenstern sind somit je eine gleiche Anzahl von Tasten zugeordnet, die zwei Spalten und zwei Zeilen bilden. Durch diese Anordnung gelingt es, die wechselnde Beschriftung für die verschiedenen Tasten in unmittelbarer Nachbarschaft zu diesen darzustellen.

Die Aufgabe der vorliegenden Erfindung besteht darin, ein Verfahren zu schaffen, mit dem sämtliche Wägeprogramme auf einfache Weise angewählt und zudem konfiguriert werden können.
Eine weitere Aufgabe der Erfindung ist die Schaffung einer Waage mit einer Tastatur und einem Anzeigefeld, die eine einfache Anwahl der Wägeprogramme und die Konfiguration der Systemfunktionen ermöglicht.

Gelöst wird diese Aufgabe durch ein Verfahren, bei dem die Anwahl der Grundoperationen und die Konfiguration der Parameter der Wägeprogramme mit einer unterhalb dem Anzeigefeld angeordneten Taste mit nebeneinanderliegenden, jeweils den über den Tastenabschnitten angezeigten Operationen entsprechenden variablen Schaltbereichen erfolgt, sowie durch eine Waage, bei der die Tastatur mindestens zwei Tasten aufweist, wobei eine erste Taste zum Nullstellen bestimmt und mindestens eine zweite Taste als balkenförmiges Sensortastenfeld ausgebildet und in Richtung der X-Koordinate in individuelle Schaltbereiche kleiner Breite unterteilt ist.
Die Verwendung einer balkenförmigen, über die gesamte Länge beliebig frei unterteilbaren Taste und eines unmittelbar über der Taste liegenden Anzeigefeldes ermöglicht es, im Anzeigefeld die aufrufbaren Programme und Konfigurationsmöglichkeiten aufzuzeigen und sie durch Berühren der unter der Anzeige liegenden Taste im gesamten unmittelbar zur Anzeige benachbart liegenden Bereich direkt aufzurufen.
Die freie Gestaltung der Anzeige im Anzeigefeld bezüglich der Länge des angezeigten Programmes oder Parameters und die freie Aufteilbarkeit der Taste ergibt den Vorteil, dass jeweils nur gerade eine der angezeigten Programme oder Parameter entsprechende Anzahl "Tasten" der Bedienungsperson zur Verfügung gestellt werden und auch das Anzeigefeld nicht durch andere, nicht notwendige Angaben unübersichtlich wird. Die Bedienungsperson muss folglich bei ihrer Arbeit nicht aus einer grossen Anzahl Tasten die richtige zu suchen, sondern es ist möglich, den gesamten Bereich einer Taste unterhalb des im Anzeigefeld angezeigten Modus als Betätigungsbereich zu benutzen. Es ist folglich häufig der Fall, dass die Taste nur für einen oder zwei Parameter bereitsteht - der Betätigungsbereich ist dann sehr lang -; stehen sieben, acht oder mehr Anzeigen im Anzeigefeld, z.B. bei der alphanumerischen Eingabe, so ist die Taste in eine entsprechend grosse Zahl von "Tastenbereichen" aufgeteilt. Die grosse Anzahl von Tastenbereichen erscheint z.B. beim Konfigurieren; beim Wägen, einer Handlung, die oft von Hilfspersonal durchgeführt wird, werden im allgemeinen nur zwei oder drei Tastenbereiche angezeigt. Diejenigen Bereiche der Tasten, über denen keine Anzeige im Anzeigefeld erscheint, lösen bei deren Berühren auch keine Wäge- oder Konfigurationsfunktion aus; sie sind bedienungsneutral.

Anhand illustrierter Ausführungsbeispiele wird die Erfindung erläutert.
Es zeigen:
- Figur 1: eine schematische Darstellung einer Präzisionswaage mit einem Anzeige- und Tastenfeld,
- Figur 2: das Anzeigefeld mit dem Hauptmenu zu Beginn der Programmwahl und die darunterliegende balkenförmige Taste,
- Figur 3: das Anzeigefeld nach der Anwahl APPL (application) im Hauptmenu,
- Figur 4: das Anzeigefeld nach der Anwahl APPL (application) im Hauptmenu, Darstellung der in Figur 3 nicht sichtbaren Parameter nach dem Betätigen von > >,
- Figur 5: das Anzeigefeld nach der Anwahl + /- WEIGHT,
- Figur 6: das Anzeigefeld nach der Anwahl WEIGHTENTRY,
- Figur 7: das Anzeigefeld nach der Anwahl MINWEIGHT mit der Zahlenreihe 0 bis 9, mit Anwahl der Ziffer 1,
- Figur 8: das Anzeigefeld nach der Anwahl einer ersten Zahl "17" in der oberen Zeile und
- Figur 9: ein Diagramm des SYSTEM-Modus.

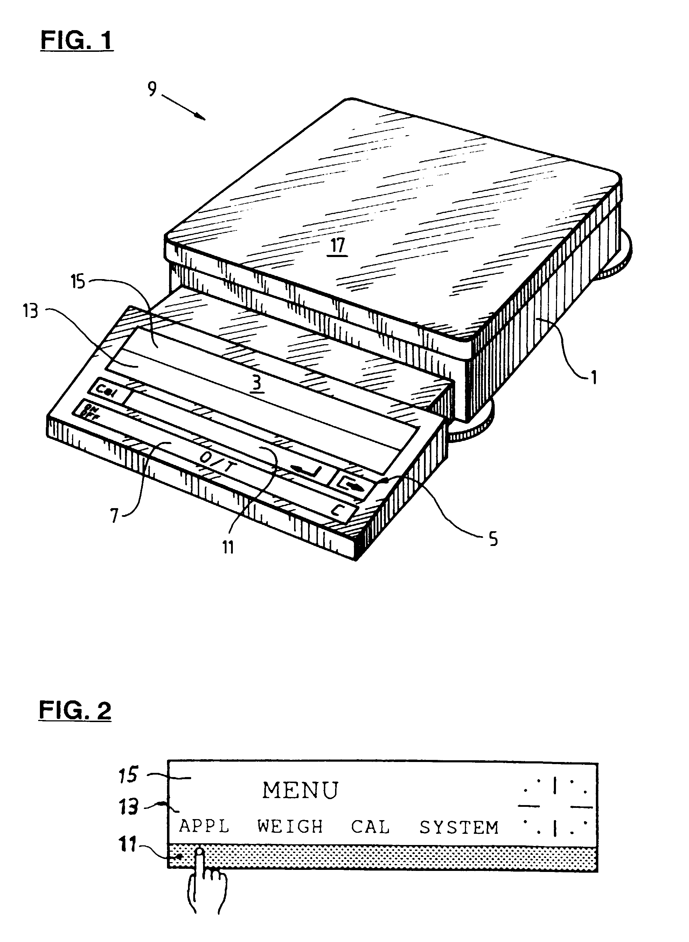

Die in Figur 1 dargestellte Waage 9 weist ein Waagengehäuse 1 mit einem alphanumerischen Anzeigefeld 3 und mit einem Tastaturfeld (5) mit zwei balkenförmigen Tasten 7 und 11 auf. Das Anzeigefeld 3 ist in zwei Zeilen 13 und 15 aufgeteilt. Anstelle von zwei kann selbstverständlich auch eine grössere Anzahl Zeilen oder eine vollgraphische Darstellung, die auch die Anzeige von Piktogrammen erlaubt, vorgesehen sein. Mit Bezugszeichen 17 ist eine flache Waagschale dargestellt. Alternativ dazu einer kann natürlich auch eine in einem Windschutzgehäuse eingebaute Waagschale vorgesehen sein (keine Darstellung).

Unter "Betätigen" wird entweder das Drücken einer Taste und Ueberwinden des mechanischen Widerstandes oder das Berühren einer als Softkey oder Touchpad oder Touchpanel ausgebildeten Taste verstanden. Es wird hier davon ausgegangen, dass mindestens die Taste 11 als Softkey oder Touchpad ausgebildet ist und in viele kleine Abschnitte unterteilt ist. Im dargestellten Beispiel wird in der Taste 11 potentiometrisch über eine Widerstandsschicht, die auf der Schaltfolie aufgebracht ist, die X-Koordinate ermittelt. Die Auflösung der X-Koordinate hängt von der Qualität der Widerstandsschicht und der Auswerteelektronik ab; sie ist beispielsweise maximal ca. 0,5 mm, d.h. beim Berühren der Taste 11 erkennt die Auswerteelektronik den Ort der Berührung mit einer Auflösung in Richtung der X-Koordinate von mindestens 0,5 mm. Als "Ort" der Berührung wird der Bereich mit der grössten Flächenpressung, d.h. die Mitte des Fingers erkannt. Der ermittelte Wert der X-Koordinate wird einer oberhalb der Berührungsstelle im Anzeigefeld 13 aufleuchtenden Funktion zugeordnet. Alternativ zu örtlich getrennten Anzeige- und Tastenfeldern kann eine durchsichtige Taste treten, unter der die Anzeigen erscheinen.

### Beispiel 1

Zum Anwählen und Konfigurieren wird nach dem Einschalten der Waage durch Betätigen der "ON" Taste, die Teil der Tara-Taste sein kann, und durch Betätigen der MENU-Taste 11 das Hauptmenu im Anzeigefeld 13 aufgerufen.
Es erscheinen dann folgende Angaben:
APPL (application), WEIGH (weight), CAL (calibration), SYST (System).
Die ENTER- und DRUCKBEFEHL-Funktionen können separaten Tasten zugeordnet (Figur 1) oder ebenfalls im Anzeigefeld 13 aufgezeigt und über die Taste 11 aktivierbar sein.

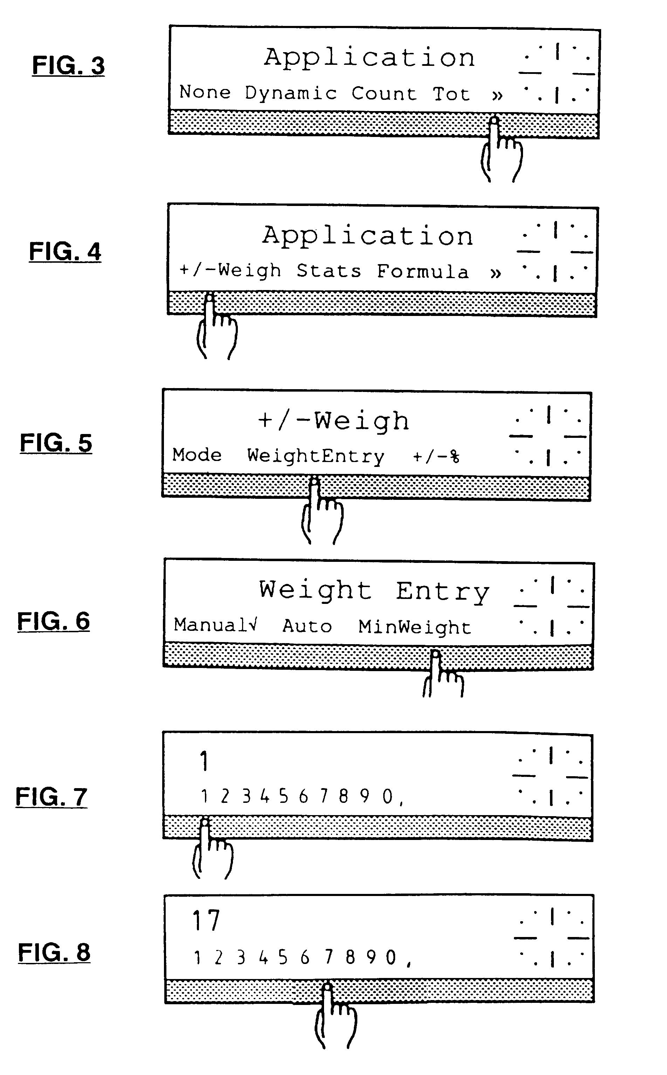

Das Berühren der Taste 11 im Bereich direkt unterhalb APPL interpretiert die Waagenelektronik als Befehl, den Menu-Punkt APPL vergrössert dargestellt und vollständig ausgeschrieben auf dem Anzeigefeld 15 erscheinen zu lassen. In der Anzeigezeile (Anzeigefeld 13) erscheinen nun die Unterfunktionen innerhalb der Funktion APPL (Fig. 3). Die in der Grundoperation APPL möglichen Funktionen sind wiederum nebeneinander und über der Taste 11 angeordnet dargestellt und können durch Betätigen der Taste, d.h. Berühren unterhalb der gewünschten Funktion, angewählt werden. Die Anordnung der Anzeigen ist dabei bezüglich der X-Koordinate nicht einer festen Zuordnung unterworfen; sie lässt sich an die Erfordernisse bezüglich Platzbedarf der Angaben im Anzeigefeld anpassen. Wenn nicht alle Funktionen nebeneinander im Anzeigefeld Platz finden, wird dies durch das Scroll-Zeichen > > angezeigt. Das Berühren der Taste 11 unterhalb > > lässt die weiteren Funktionen im Anzeigefeld 13 erscheinen (Fig.4). Nach der Markierung von z.B. + /- WEIGH, erfolgt die Anzeige der Unterfunktionen der Funktion + /-WEIGH im Anzeigefeld 13 (Fig.5). Als nächstes könnte innerhalb dieser Funktionen beispielsweise die Funktion WEIGHTENTRY angewählt und sichtbar gemacht werden (Fig.6). Als letztes in der eine Baumstruktur aufweisenden APPL-Funktion kann nun die Funktion MINWEIGHT aufgerufen werden, und es erscheinen dann im Anzeigefeld -13, wiederum nebeneinander angeordnet, die Zahlen "1 2 3 4 5 6 7 8 9 0" sowie Satzzeichen, > >, u.dgl., welche, zu einer mehrstelligen Zahl zusammengefügt, einen gewünschten minimalen Wägewert ergeben. Allfällig notwendige Kommastellen können ebenfalls mit der Taste 11 eingesetzt werden.

Durch längeres Betätigen der MENU-Taste wird der eingegebene Wert gespeichert und im Anzeigefeld 13 erscheinen nun einzig die ausgewählten Wägeparameter und -funktionen. Der Tastenbereich unterhalb dem dann nicht beschrifteten Anzeigefeld 13 ist beim Wägen inaktiv. Im oberen Anzeigefeld 15 erfolgt numerisch die Gewichtsanzeige und dahinter die Masseinheit (kg, g, oz, ...). Eine alternative Masseinheit kann durch Betätigen der Taste 11 angezeigt und ausgewählt werden, sofern sie zuvor im SYSTEM-Modus bestimmt worden ist.

### Beispiel 2

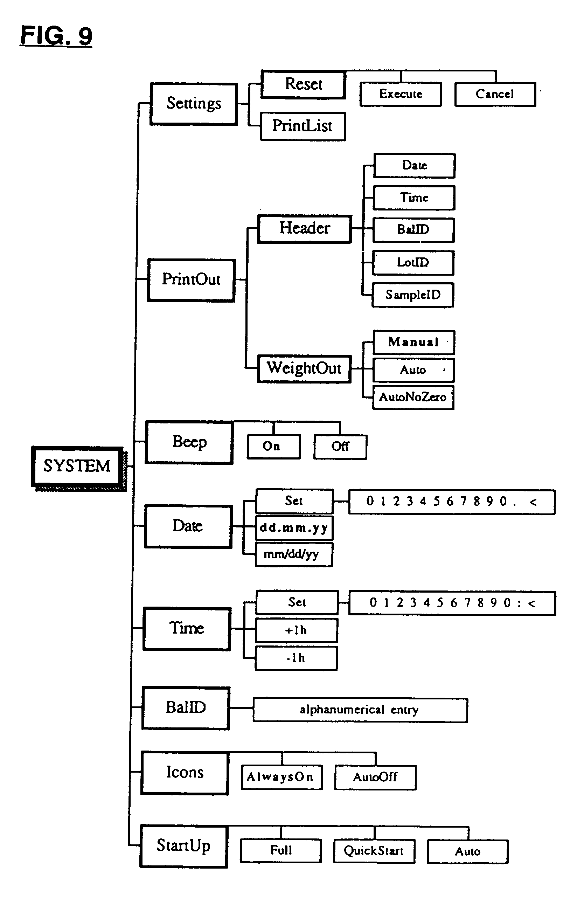

Das Berühren der Taste 11 direkt unterhalb SYSTEM im Hauptmenu interpretiert die Waagenelektronik als Befehl, den Menu-Punkt SYSTEM als nächstes auf dem Anzeigefeld 13 erscheinen zu lassen. In Figur 9 ist der gesamte SYSTEM-Baum dargestellt. Aus diesem sind jeweils aufrufbare Ebenen innerhalb des Modus SYSTEM schematisch dargestellt. Diese Figur ersetzt die einzelnen Anzeigemodi wie sie für die Applikation (APPL) in den Figuren 1 bis 7 dargestellt sind. Die in der Grundoperation SYSTEM möglichen Funktionen sind wiederum nebeneinander und direkt über der Taste 11 angeordnet im Anzeigefeld 13 dargestellt und können durch Betätigen der Taste, d.h. Berühren unterhalb der gewünschten Funktion, aufgerufen werden. Nach der Markierung z.B. von DATE erfolgt die Anzeige der Unterfunktionen der Funktionen DATE im Anzeigefeld 13. Als nächstes können innerhalb dieser Funktionen beispielsweise die Funktion SET aufgerufen und deren Unterfunktionen sichtbar gemacht werden. Es erscheinen dann im Anzeigefeld 13 wiederum nebeneinander angeordnet die Zahlen "1 2 3 4 5 6 7 8 9 0: <" sowie Satzzeichen u.dgl., welche zu einem Datum zusammengefügt werden können.

Durch Betätigen der ENTER-Taste wird der eingegebene Wert gespeichert, und im Anzeigefeld 13 erscheinen die übergeordneten Funktionen SET, dd.mm.yy und mm.dd.yy. Jedes weitere Antippen der ENTER-Taste lässt das jeweils übergeordnete Menu erscheinen. Durch Betätigen der DRUCKBEFEHL-Taste kann direkt ins Hauptmenu gesprungen werden.

### Beispiel 3

Das zusätzliche Berühren der Taste 11 im SYSTEM-Modus direkt unterhalb STARTUP interpretiert die Waagenelektronik als Befehl, den Menu-Punkt STARTUP als nächstes auf dem Anzeigefeld 13 erscheinen zu lassen (Fig.9). Die in der Grundoperation STARTUP möglichen Funktionen (FULL, QUICKSTART, AUTO) werden wiederum nebeneinander und direkt über der Taste 11 angeordnet im Anzeigefeld 13 dargestellt und können durch Betätigen der Taste, d.h. Berühren unterhalb der gewünschten Funktion, ausgewählt werden. Man beachte, dass für die Auswahl dieser Funktionen auf der Taste in x-Richtung bedeutend mehr Platz vorhanden ist als im vorausgegangenen Beispiel, da nur drei Alternativen angezeigt sind. Nach der Markierung von FULL und Bestätigen mit der ENTER-Taste wird der Modus FULL aktiviert. Ein Haken oder eine Kontrastdarstellung zeigt den ausgewählten Modus nach dem Berühren der Taste optisch an. In der Waagenelektronik ist nun der übliche Aufstartablauf nach dem Berühren der Tarataste im Standby-Modus aktiviert, d.h., Lampentest, Modellname, Anzeige "0,00 g" aktiviert. Die Bedienungsperson kann somit vor Beginn der ersten Wägung die (waagenspezifischen) vorgegebenen optischen Kontrollen durchführen. Dieser "manuelle" Aufstart entspricht dem Stand der Technik.
Durch die Markierung QUICKSTART und Bestätigen mit der ENTER-Taste wird ein modifizierter Aufstart aktiviert. Mit diesem wird die Waage ohne vorausgehenden Lampentest, Angabe des Modellnamens etc. aufgestartet. Durch Betätigen der TARA-Taste oder Auflegen eines Gewichtes mit einem vorgebbaren Minimalwert erscheint unmittelbar die Anzeige des aufgelegten Gewichtswertes in der ausgewählten Gewichtseinheit.

Die dritte Möglichkeit ist die Aktivierung des "AUTO"-Modus. Dieser ermöglicht einen vollautomatischen Aufstart der Waage, der nach einem Stromunterbruch ausgelöst wird.
Nach der Auswahl von FULL, QUICKSTART oder AUTO kann mit der ENTER-Taste ins MENU zurückgekehrt werden.

Die ENTER-Taste und die Taste für den DRUCKBEFEHL können, wie erwähnt, ebenfalls als Abschnitt der als Softkey-Taste ausgebildeten Taste 11 ausgebildet sein; sie können aber auch als separate unabhängige Tasten unterhalb des Anzeigefeldes 13 oder neben diesem angeordnet und direkt beschriftet sein. Diese Varianten sind für den Benutzer von aussen nicht unbedingt unterscheidbar, wenn eine entsprechend ausgebildete Abdeckung den Tastenbereich überspannt.

Während des Wägens im konfigurierten Wägemodus können mit der Taste 11, d.h. durch Berühren derselben, die über der Berührungsstelle im Anzeigefelde 13 angegebenen Funktionen wie Addieren, Speichern des Wägeresultates etc. ausgewählt werden. Die vorzugsweise ebenfalls als Softkey ausgebildete Tarataste 7 kann, nebst der Funktion als TARA über ihre gesamte Länge, auch zusätzlich für Funktionen Öffnen und Schliessen eines Windschutzes, ON/OFF etc. konfigurierbar sein.

Im SYSTEM-Modus können nebst den beschriebenen Einstellungen auch das DATUM und/oder die UHRZEIT in einem HEADER zur Anzeige gebracht werden. Im HEADER können nebst Zeit und Datum auch weitere für die Wägung massgebende Daten angezeigt und - falls erwünscht - ausgedruckt werden, wenn ein entsprechender Drucker zur Verfügung steht.

## Patentansprüche

1. Verfahren zum Anwählen und Konfigurieren von Wägeprogrammen in einer Waage mit einem Tastaturfeld (5) und einem Anzeigefeld (3), wobei die Anwahl der Operationen und die Konfiguration der Parameter der Wägeprogramme mit einer unterhalb dem Anzeigefeld (3) angeordneten, nicht dem Nullstellen dienenden Taste (11) des Tastaturfeldes (5) mit nebeneinanderliegenden, jeweils den über den Tastenabschnitten im Anzeigefeld (3) angezeigten Operationen bzw. Parametern entsprechenden variablen Schaltbereichen erfolgt, indem eine freie Aufteilbarkeit der Taste (II) vorliegt.

2. Verfahren nach Anspruch 1, wobei die Taste (11) eine balkenförmige Gestalt aufweist und in ihrer Längsausdehnung (x-Koordinate) programmabhängig in einzelne, als individuelle Schaltbereiche dienende Abschnitte variabler Breite unterteilt wird.

3. Verfahren nach einem der Ansprüche 1 und 2, wobei
- durch Berühren der unterhalb des Anzeigefeldes (3) angeordneten balkenförmigen Taste (11) die darüber angezeigte Operation angewählt wird,
- danach im Anzeigefeld (3) über der Taste (11) die zur ausgewählten Operation gehörenden Unteroperationen oder -funktionen angezeigt werden,
- die gewünschte Unteroperation oder -funktion angewählt wird, solange, bis sämtliche Parameter eingestellt sind,
- durch Betätigen der den ausgewählten und eingestellten Parametern entsprechenden Schaltbereiche im Anzeigefeld (3) die Wägeparameter erscheinen und zum Wägen durch Betätigen der Taste (11) unterhalb dem angezeigten Parameter ausgewählt werden können.

4. Elektronische Waage, mit einer Messzelle, einer digitalen Signalverarbeitungseinheit für die Verarbeitung und Anzeige unterschiedlicher Wägeprogramme, einem Anzeigefeld (3) zum alphanumerischen Anzeigen der Operationen, Messwerte und -parameter und einem Tastaturfeld (5) zum Nullstellen der Anzeige sowie zum Anwählen und Konfigurieren eines der im Anzeigefeld (3) angezeigten, dadurch gekennzeichnet, dass das Tastaturfeld (5) mindestens zwei Tasten (7, 11) aufweist, wobei eine erste Taste (7) zum Nullstellen bestimmt und mindestens eine zweite Taste (11) als balkenförmiges Sensortastenfeld ausgebildet, benachbart zum Anzeigefeld (3) angeordnet, in Richtung der x-Koordinate in individuelle Schaltbereiche kleiner Breite unterteilbar ist, und eine freie Aufteilbarkeit der Taste (II) bis zur kleinen Breite vorliegt, so daß jeweils den über den Tastenabschnitten im Anzeigefeld (3) angezeigten Operationen bzw. Parametern entsprechende variable Schaltbereiche zugeordnet sind.

5. Waage nach Anspruch 4, dadurch gekennzeichnet, dass mindestens die zweite Taste (11) nach dem Potentiometer-Prinzip oder einem ähnlichen, die Taste in Richtung der x-Koordinate variabel unterteilenden Prinzip aufgebaut ist.

6. Waage nach einem der Ansprüche 4 oder 5, dadurch gekennzeichnet, dass jeder Tastenbereich auf der Taste (11) dem jeweils über dem Tastenbereich in einer benachbarten Zeile (13) des Anzeigefelds (3) angezeigten Parameter zugeordnet ist.

## Claims

1. A method of selecting and configuring weighing programs in a balance having a key panel (5) and a display panel (3), wherein selection of the operations and configuration of the parameters of the weighing programs is effected with a key (11) of the key panel (5) which is arranged beneath the display panel (3) and which does not serve for zeroing, with mutually juxtaposed variable switching regions which respectively correspond to the operations or parameters displayed over the key portions in the display panel (3), insofar as the key (11) can be freely divided up.

2. A method according to claim 1 wherein the key (11) is of a bar-shaped configuration and is subdivided in its longitudinal extent (x-co-ordinate) in program dependency into individual portions of variable width which serve as individual switching regions.

3. A method according to one of claims 1 and 2 wherein
- by touching the bar-shaped key (11) arranged beneath the display panel (3) the operation displayed thereabove is selected,
- thereafter the display panel (3) displays over the key (11) the sub-operations or sub-functions belonging to the selected operation,
- the desired sub-operation or sub-function is selected until all parameters are set, and
- by actuation of the switching regions in the display panel (3), which correspond to the selected and set parameters, the weighing parameters appear and can be selected for the weighing operation by actuation of the key (11) beneath the displayed parameter.

4. An electronic balance having a weighing cell, a digital signal processing unit for processing and displaying different weighing programs, a display panel (3) for alphanumeric display of the operations, measurement values and parameters, and a key panel (5) for zeroing of the display and for the selection and configuration of one of the weighing programs displayed in the display panel (3), characterised in that the key panel (5) has at least two keys (7, 11), wherein a first key (7) is intended for zeroing and at least one second key (11) is in the form of a bar-shaped sensor key panel, is arranged adjacent to the display panel (3) and is subdivided in the direction of the x-co-ordinate into individual switching regions of small width, and the key (11) can be freely divided up to afford a small width so that associated with the respective operations or parameters displayed in the display panel (3) over the key portions are corresponding variable switching regions.

5. A balance according to claim 4 characterised in that at least the second key (11) is designed on the potentiometer principle or a similar principle which variably subdivides the key in the direction of the x-co-ordinate.

6. A balance according to one of claims 4 and 5 characterised in that each key region on the key (11) is associated with the parameter respectively displayed over the key region in an adjacent line (13) of the display panel (3).

## Revendications

1. Procédé pour sélectionner et configurer des programmes de pesage dans une balance comprenant un clavier (5) et un panneau d'affichage (3), dans lequel la sélection des opérations et la configuration des paramètres des programmes de pesage s'effectuent à l'aide d'une touche (11) du clavier (5) qui est située sous le panneau d'affichage (3) et ne sert pas à la remise à zéro et qui comporte des zones de commutation variables juxtaposées correspondant à chaque fois aux opérations ou paramètres affichés au-dessus des segments de touche dans le panneau d'affichage (3), ladite touche (11) étant librement divisible.

2. Procédé selon la revendication 1, dans lequel la touche (11) présente la forme d'une barre et est divisée sur sa longueur (coordonnée X), en fonction du programme, en segments individuels de largeur variable servant de zones de commutation individuelles.

3. Procédé selon l'une des revendications 1 et 2, dans lequel
- l'opération affichée au-dessus de la touche (11) en forme de barre située sous le panneau d'affichage (3) est sélectionnée par une impulsion sur ladite touche (11),
- les sous-opérations ou sous-fonctions faisant partie de l'opération sélectionnée sont ensuite affichées dans le panneau d'affichage (3) situé au-dessus de la touche (11),
- la sous-opération ou sous-fonction souhaitée est sélectionnée le temps que tous les paramètres soient réglés,
- les paramètres de pesage apparaissent en appuyant sur les zones de commutation du panneau d'affichage correspondant aux paramètres sélectionnés et réglés et peuvent être sélectionnés pour la pesée en actionnant la touche (11) située sous le paramètre affiché.

4. Balance électronique comprenant une cellule de mesure, une unité de traitement numérique de signal pour le traitement et l'affichage de divers programmes de pesage, un panneau d'affichage (3) pour l'affichage alphanumérique des opérations, des valeurs et des paramètres de mesure et un clavier (5) pour la remise à zéro de l'affichage ainsi que pour la sélection et la configuration de l'un des programmes de pesage affichés sur le panneau d'affichage (3), caractérisée en ce que le clavier (5) comporte au moins deux touches (7, 11), une première touche (7) étant destinée à la remise à zéro et au moins une deuxième touche (11) étant conçue sous la forme d'un bloc de touches sensitives en forme de barre disposé à côté du panneau d'affichage (3) et étant divisée dans le sens de la coordonnée X en zones de commutation individuelles de faible largeur, la touche (11) étant librement divisible jusqu'à la faible largeur, de façon à associer à chaque fois aux opérations ou paramètres affichés au-dessus des segments de touche dans le panneau d'affichage (3) des zones de commutation variables correspondantes.

5. Balance selon la revendication 4, caractérisée en ce qu'au moins la deuxième touche (11) est conçue selon le principe potentiométrique ou selon un principe analogue consistant à diviser la touche de manière variable dans le sens de la coordonnée X.

6. Balance selon l'une des revendications 4 et 5, caractérisée en ce que chaque zone partielle de la touche (11) est associée à un paramètre affiché à chaque fois au-dessus de la zone partielle sur une ligne voisine (13) du panneau d'affichage (3).
